## Europäisches Patentamt
## European Patent Office
## Office européen des brevets

(19)

(11) Numéro de publication: **0 102 857**
**B1**

(12)

# FASCICULE DE BREVET EUROPÉEN

(45) Date de publication du fascicule du brevet: **17.12.86**

(51) Int. Cl.⁴: **C 08 L 23/12, C 08 L 23/08**

(21) Numéro de dépôt: **83401276.7**

(22) Date de dépôt: **21.06.83**

(54) Compositions de polypropylène et de copolymères éthylène/alpha-oléfines et leur application à la fabrication de fils mono-orientés.

(30) Priorité: **30.06.82 FR 8211450**

(43) Date de publication de la demande:
**14.03.84 Bulletin 84/11**

(45) Mention de la délivrance du brevet:
**17.12.86 Bulletin 86/51**

(84) Etats contractants désignés:
**AT BE CH DE GB IT LI LU NL SE**

(56) Documents cité:
**EP-A-0 048 227**
**EP-A-0 052 557**
**FR-A-1 316 312**
**GB-A-2 063 278**
**US-A-3 426 105**

(73) Titulaire: **Société Chimique des Charbonnages S.A., Tour Aurore Place des Reflets, F-92080 Paris La Défense Cédex 5 (FR)**

(72) Inventeur: **Hert, Marius, 21 Chaussée Brunehaut Estrée Cauchy, F-62690 Aubigny- en- Artois (FR)**
Inventeur: **Dufosse, Philippe, 111 rue du Rietz Hinges, F-62400 Béthune (FR)**

(74) Mandataire: **Dubost, Thierry, SOCIETE CHIMIQUE DES CHARBONNAGES Service Propriété Industrielle B.P. 57, F-62670 Mazingarbe (FR)**

EP 0 102 857 B1

LIBER, STOCKHOLM 1986

## Description

La présente invention a pour objet des compositions de polypropylène et de copolymères éthylène/α-oléfine et leur application à la fabrication de fils mono-orientés.

On connait depuis plusieurs années un processus de fabrication de sacs pour l'emballage de denrées aussi diverses que engrais, produits chimiques, aliments pour bétail, céréales, farine, sucre, graines et semences, ledit processus consistant à extruder des granulés de polypropylène à travers une boudineuse, à refroidir puis couper en bandes le film ainsi obtenu, à réchauffer les bandes dans un four à air chaud puis à les étirer par des rouleaux d'où la production d'un fil plat appelé bandelette, à stabiliser la bandelette en la faisant passer dans une seconde étuve à air chaud, à enrouler les bandelettes stabilisées sous forme de bobines et enfin à tisser la toile des sacs à partir de ces bobines. Les sacs ainsi obtenus présentent de bonnes qualités de résistance, légèreté, imputrescibilité et stabilité dimensionnelle.

Le brevet français n° 1.316.312 décrit par ailleurs des compositions, applicables au revêtement de fils de cuivre, comprenant de 2 à 75 en poids d'un copolymère d'éthylène et d'un hydrocarbure à terminaison insaturée contenant plus de 3 atomes de carbone (de densité 0,90 à 0,96), la teneur dudit hydrocarbure dans le copolymère étant comprise entre 0,1 et 50 % en poids et l'indice de fusion des compositions étant compris entre 0,005 et 5.

Le brevet EP-A-0048227 décrit une matière plastique étirée à base de polyéthylène et ne comprenant pas de polypropylène. Le brevet GB-A-2063278 décrit une composition, applicable à la fabrication de housses d'emballage rétractables, comprenant de 30 à 90 % en poids d'une copolymère élastomère éthylène/ -oléfine de densité inférieure ou égale à 0,91 et de 10 à 70 % en poids de polypropylène ou polybutène-1 cristallin; le taux molaire d'-oléfine copolymérisée est au moins de 10 %. Le brevet EP-A-0052557 décrit l'addition de polypropylène à un copolymère d'éthylène. Les compositions obtenues contiennent au moins 40 % en poids de polypropylène. Le brevet US-A-4426105 décrit des composition dans lesquelles le copolymère a une densité élevée (0,945-0,955) et contient une faible teneur en motifs butène.

L'industrie de fabrication de sacs tissés pour emballage est constamment à la recherche de nouveaux matériaux de propriétés améliorées, en particulier la ténacité.

De manière surprenante, on a trouvé selon la présente invention des copolymères éthylène/α-oléfine qui, en mélange avec le polypropylène permettent la fabrication de fils mono-orientés dans de meilleures conditions et avec des propriétés améliorées par rapport aux deux constituants du mélange.

Un premier objet de la présente invention consiste donc en des compositions comprenant de 10 à 40 % en poids de polypropylène isotactique et de 60 à 90 % en poids d'au moins un copolymère d'éthylène et d'α-oléfines comprenant au moins 4 atomes de carbone, de densité comprise entre 0,905 et 0,940, d'indice de fluidité compris entre 0,2 et 3 dg/min, caractérisées en ce que la teneur moyenne en motifs α-oléfines dans le copolymère est comprise entre 1 et 8 % en moles, en ce que la distribution des motifs α-oléfines dans le copolymère est hétérogène, ledit copolymère comprenant des fractions cristallines et des fractions amorphes, et en ce que la teneur en motifs α-oléfines dans le copolymère varie entre au moins 0,2 et au plus 5 fois leur teneur moyenne selon les fractions considérées. Ces copolymères de structure particulière, décrits dans la demamde de brevet européen publiée sous le n° 0 070 220, peuvent subsidiairement être caractérisés en ce que leurs fractions cristallines présentent un pic unique de fusion compris entre 116° et 130°C et représentent de 20 à 50 % en poids du copolymère total. Ils peuvent aussi être subsidiairement caractérisés en ce que leur taux d'insaturation global est compris entre 0,25 et 0,50 double liaison pour 1000 atomes de carbone. Dans la suite de la description, le terme copolymère sera employé pour désigner à la fois des polymères binaires comportant une α-oléfine en sus de l'éthylène et des polymères ternaires comportant deux α-oléfines en sus de l'éthylène. Ces copolymères utilisables selon la présente invention peuvent être subsidiairement caractérisés par une masse moléculaire moyenne comprise entre 15.000 et 60.000 et/ou un indice de polydispersité compris entre 3 et 9 pour les polymères binaires, 4 à 12 pour les polymères ternaires. Dans la définition précédente il faut entendre, de manière conventionnelle dans la technique des polymères, la masse moléculaire moyenne comme étant la masse moléculaire moyenne en nombre Mn et l'indice de polydispersité comme étant le rapport Mw/mn de la masse moléculaire moyenne en poids à la masse moléculaire moyenne en nombre. D'autre part les α-oléfines pouvant entrer dans la constitution des copolymères hétérogènes selon l'invention sont par exemple le butène-1, l'hexène-1, le méthyl-4-pentène-1, l'octène-1. Lorsque deux α-oléfines sont simultanément présentes dans le copolymère selon l'invention (cas d'un terpolymère) leur teneur moyenne totale est, comme décrit précédemment, comprise entre 1 et 8 % en moles et en outre le rapport de leurs teneurs moyennes respectives est de préférence compris entre 0,25 et 4. Ainsi par exemple un terpolymère éthylène/butène-1/hexène-1 selon l'invention comprenant en moyenne 95 % en moles de motifs éthylène pourra comprendre en moyenne de 1 à 4 % en moles de motifs butène-1 et en moyenne de 4 à 1 % en moles de motifs hexène-1.

Par polypropylène isotactique utilisable au sens de la présente invention on entend d'une part des homopolymères du propylène, d'autre part des copolymères propylène-éthylène comprenant moins de 10 % en moles de motifs dérivés de l'éthylène, ayant un indice de fluidité (mesurée selon la norme ASTM D 1238-73) compris entre 0,5 et 10 dg/min.

Les deux types de polymères entrant comme constituants dans les compositions selon l'invention sont très facilement miscibles pour former des mélanges homogènes. Les compositions selon l'invention peuvent donc être préparées sans difficultés par l'une quelconque des techniques de mélange des polymères, notamment le

2

mélange des granulés à l'état solide à température ambiante et le mélange à l'état fondu sous l'effet de la chaleur.

Les compositions selon l'invention permettent la fabrication, par la technique décrite précédemment de fils mono-orientés dans de meilleures conditions et avec des propriétés améliorées par rapport aux fils mono-orientés constitués à partir de chaque polymère du mélange. Ces fils mono-orientés se distinguent notament par le taux d'étirage utilisé lors de la fabrication et par leur ténacité.

Les fils mono-orientés obtenus à partir des compositions selon l'invention trouvent de nombreuses applications dans l'industrie de l'emballage, sous la forme de sacs tissés.

Les exemples suivants sont donnés à titre illustratifs et non limitatifs.

**Exemple 1**

On transforme en fils mono-orientés appelés bandelettes, par la méthode décrite précédenment, des compositions comprenant:

(A) 80 % en poids d'un copolymère éthylène-butène-1 d'indice de fluidité (mesuré selon la norme ASTM D 1238-73) égal à 0,8 dg/min, de masse volumique (mesurée selon la norme NF T 51-063) égale à 0,919 g/cm³, de masse moléculaire moyenne en nombre (mesurée par chromatographie de perméation de gel) égale à 43.000, d'indice de polydispersité Mw/Mn égal à 3,6, ayant une teneur molaire moyenne en motifs butène-1 égale à 3,2 %, un point de fusion de la fraction cristalline (déterminé par analyse enthalpique différentielle) égal à 122° C et dont l'hétérogénéité de la distribution du butène-1 (déterminée par un test de fractionnement du copolymère) s'exprime par le multiple (2,2 fois) et le sousmultiple (0,5 fois) de la teneur moyenne entre lesquels varie la teneur en motifs butène-1 selon les fractions considérées. Ce copolymère est obtenu conformément à l'exemple 5 de la demande européenne n° 0 070 220.

(B) 20 % en poids d'un copolymère propylène/éthylène, obtenu en présence d'un catalyseur de type Ziegler, de masse volumique 0,905 g/cm³, d'indice de fluidité égal à 4 dg/min (déterminé selon la norme AS,TM D 1238-73) et de module de rigidité (déterminé selon la norme ASTM D 790) égal à 10 300 Kgf/cm².

Dans le tableau ci-après figurent, outre la proportion en poids du copolymère (A) dans la composition, le taux d'étirage et le résultat de la mesure, sur ces fils mono-orientés, de la ténacité, exprimée en grammes par denier et déterminée selon la norme AFNOR.

**Exemples 2 et 3**

(comparatifs)

On transforme en fils mono-orientés appelés bandelettes, par la même méthode qu'à l'exemple 1, d'une part le copolymère (A) pur (exemple 2), d'autre part le copolymère (B) pur (exemple 3). Dans le tableau ci-après figurent le taux d'étirage et le résultat de mesure de la ténacité selon la même méthode.

**Tableau**

| Exemple | % (A) | Taux d'étirage | Ténacité |
|---------|-------|----------------|----------|
| 1 | 80 | 11 | 5,3 |
| 2 | 100 | 8 | 4,1 |
| 3 | 0 | 12 | 4,9 |

**0 102 857**

### Revendications

1. Composition comprenant de 10 à 40 % en poids de polypropylène isotactique et de 60 à 90 % en poids d'au mois un copolymère d'éthylène et d'α-oléfines comprenant au moins 4 atomes de carbone, de densité commprise entre 0,905 et 0,940 et d'indice de fluidité compris entre 0,2 et 3 dg/min, caractérisée en ce que la teneur moyenne en motifs α-oléfines dans le copolymère est comprise entre 1 et 8 % en moles, en ce que la distribution des motifs α-oléfines dans le copolymère est hétérogène, ledit copolymère comprenant des fractiors cristallines et des fractions amorphes, et en ce que la teneur en motifs α-oléfines dans le copolymère varie entre au moins 0,2 et au plus 5 fois leur teneur moyenne selon les fractions considérées.

2. Composition selon la revendication 1, caractérisée en ce que le polypropylène isotactique a un indice de fluidité compris entre 0,5 et 10 dg min.

3. Composition selon l'une des revendications 1 et 2, caractérisée en ce que les fractions cristallines du copolymère présentent un pic unique de fusion compris entre 116° et 130°C et représentent de 20 à 50 % en poids du copolymère total.

4. Composition selon l'une des revendications 1 à 3, caractérisée en ce que le copolymère d'éthylène et d'α-oléfines a une masse moléculaire comprise entre 15.000 et 60.000.

5. Composition selon l'une des revendications 1 à 4. caractérisée en ce que le copolymère comporte une seule α-oléfine et en ce que son indice de polydispersité est compris entre 3 et 9.

6. Composition selon l'une des revendications 1 à 5, caractérisée en ce que le copolymère comporte deux α-oléfines dont le rapport des teneurs moyennes respectives est compris entre 0,5 et 7.

7. Composition selon la revendication 6, caractérisée en ce que l'indice de polydispersité du copolymère est compris entre 1 et 12.

8. Composition selon l'une des revendications 1 à 7, caractérisée en ce que le polypropylène isotactique est un copolymère propylène-éthylène comprenant moins de 10 % en moles le motifs détivés de l'éthylène.

9. Fils moneorintés obtenus à partir d'une composition selon l'une des revendications 1 à 8.

### Patentansprüche

1. Zusammensetzung enthaltend 10 bis 40 Gew.-% isotaktisches Polypropylen und 60 bis 90 Gew.-% mindestens eines Copolymers von Athylen und α-Olefinen mit mindestens 4 Kohlenstoff atomen, mit einer Dichte zwischen 0,905 und 0,940 und mit einem Fließindex zwischen 0,2 und 3 dg/min dadurch gekennzeichnet, daß der mittlere Gehalt des Copolymers an α-Olefin-Eirheiten zwischen 1 und B Mol.-% beträgt, daß die Verteilung der α-Olefin-Einheiten heterogen ist, dan das genannte Copolymer kristalline Fraktionen und amorphe Fraktionen enthält, und daß der Gehalt des Copolymers an α-Olefin-Einheiten je nach den in Betracht gezogenen Fraktionen zwischen mindestens dem 0,2-fachen und höchstens dem 5-fachen ihres mittleren Gehaltes variiert.

2. Zusammensetzung nach Anspruch 1, dadurch gekennzeichnet, daß das isotaktische Polypropylen einen Fließindex zwischen 0,5 und 10 dg/min be

3. Zusammensetzung nach Anspruch 1 oder 2, dadurch gekennzeichnet, daßdie kristallinen Fraktionen des Copolymers einen einzigen Schmelzpunkt zwischen 116° und 130°C besitzen und 20 bis 50 Gew.-% des gesamten Copolymers ausmachen.

4. Zusammensetzung nach einem der Ansprüche 1 bis 3, dadurch gekennzeichnet, daß das Copolymer von Athylen und α-Olefinen eine Molekularmasse zwischen 15.000 und 60.000 besitzt.

5. Zusammensetzung nach einem der Ansprüche 1 bis 4, dadurch gekennzeichnet, daß das Copolymer ein einziges α-Olefin enthält und dan seine Polydispersitätszahl zwischen 3 und 9 liegt.

6. Zusammensetzung nach einem der Ansprüche 1 bis 5, dadurch gekennzeichnet, daß das Copolymer zwei α-Olefine enthält, wobei das Verhältnis zwischen den jeweiligen mittleren Gehalten an diesen α-Olefinen zwischen 0,25 und 4 liegt.

7. Zusammensetzung nach Anspruch 6, dadurch gekennzeichnet, daß die Polydispersitätszahl des Copolymers zwischen 4 und 12 liegt.

8. Zusammensetzung nach einem der Ansprüche 1 bis 7, dadurch gekennzeichnet, daß das isotaktische Polypropylen ein Propylen/Äthylen-Copolymer ist, das mindestens 10 Mol.-% an von Athylen stammenden Einheiten enthält.

9. Monoorientierte Fäden, die aus einer Zusammensetzung nach einem der Ansprüche 1 bis ß erhalten wurden.

### Claims

1. A composition comprising from 10 to 40 weight percent of isotactic polypropylene and from 60 to 90 weight percent of at least one copolymer of ethylene and α-olefins having at least 4 carbon atoms, said copolymer having a density between 0.905 and 0.940 and a melt index between 0.2 and 3 dg/min., characterized

4

in that the average content of said α-olefin units in said copolymer is between 1 and 8 mole percent, the distribution of said α-olefin units in said copolymer is heterogeneous, said copolymer comprising crystalline and amorphous fractions and the content of α-olefin units in said copolymer varies between at least 0.2 and at most 5 times the average content of α-olefin units, depending on the fractions considered.

2. A composition according to claim 1, characterized in that said isotactic polypropylene has a melt index of between 0.5 and 10 dg/min.

3. A composition according to one of claims 1 and 2, characterized in that the crystalline fractions of said copolymer have a single melting peak between 116°C and 130°C and represent from 20 to 50 weight percent of the total copolymer.

4. A composition according to one of claims 1 to 3, characterized in that said ethylene/α-olefin copolymer has a molecular weight between 15,000 and 60,000.

5. A composition according to one of claims 1 to 4, characterized in that said copolymer comprises a single α-olefin and the polydispersity index of said copolymer is between 3 and 9.

6. A composition according to one of claims 1 to 4, characterized in that said copolymer comprises two α-olefins, the ratio of their respective average contents being between 0.25 and 4.

7. A composition according to claim 6, characterized in that said copolymer has a polydispersity index between 4 and 12.

8. A composition according to claims 1 to 7, characterized in that said isotactic polypropylene is a propylene/ethylene copolymer comprising less than 10 mole percent units derived from ethylene.

9. Mono-oriented yarns obtained from a composition according to one of claims 1 to 8.